# FASCICULE DE BREVET EUROPEEN

(11) **EP 3 719 608 B1**
(45) Date de publication et mention de la délivrance du brevet: **08.06.2022**
(21) Numéro de dépôt: 20175960.2
(22) Date de dépôt: 14.04.2017
(51) Int. Cl.: G05D 23/13, F16K 17/38

(54) **UNITÉ DE MÉLANGE ET ROBINET MITIGEUR COMPRENANT UNE TELLE UNITÉ DE MÉLANGE**
MISCHEINHEIT UND MISCHBATTERIE, DIE EINE SOLCHE MISCHEINHEIT UMFASST
MIXING UNIT AND MIXER TAP COMPRISING SUCH A MIXING UNIT

(30) Priorité: 18.04.2016 FR 1653398
(43) Date de publication de la demande: 07.10.2020
(62) Demande divisionnaire de: 17716560.2
(73) Titulaire: Vernet, 91340 Ollainville (FR)
(72) Inventeur: PLATET, Emmanuel, 91510 LARDY (FR); FASSOLETTE, Pierre-Olivier, 42120 LE COTEAU (FR); JAGER, Frédéric, 91530 SAINT-CHERON (FR); MACE, Christian, 91680 BRUYERES LE CHATEL (FR)
(74) Mandataire: Lavoix

(56) Documents cités:
- WO-A1-2015/181237
- FR-A1- 2 876 433

## Description

La présente invention concerne une unité de mélange et un robinet mitigeur comprenant une telle unité de mélange.

L'invention se rapporte au domaine de la robinetterie d'usage sanitaire. En particulier, les robinets dits « mitigeurs » permettent d'émettre un flux mitigé d'eau courante par mélange d'un flux d'eau chaude et d'un flux d'eau froide au sein d'une cartouche montée dans le corps du robinet. Le débit respectif des flux d'eau froide et d'eau chaude admis dans la cartouche peuvent être réglés à l'aide d'un levier de commande, afin de permettre un réglage de la température du flux mitigé par rotation du levier autour d'un axe, et du débit du flux mitigé par rotation de levier autour d'un deuxième axe.

La cartouche comprend dans la plupart des cas une paire de disques céramiques ajourés, l'un étant fixe, et l'autre étant mobile sous l'action du levier tout en étant en contact plan, glissant et étanche avec le disque fixe. En fonction de la position du disque mobile sur le disque fixe, des canaux sont formés pour permettre l'admission des flux d'eau froide et chaude au sein de la cartouche, avec un débit plus ou moins important, et ainsi entraîner leur mélange pour la formation du flux mitigé.

Certaines cartouches connues peuvent être dotées d'un boîtier additionnel séparé, et qui est rapporté contre la cartouche. Par exemple, le brevet FR-B-2 876 433 décrit une cartouche pour un robinet mitigeur équipée d'un module thermostatique additionnel accouplé de manière étanche à la base de la cartouche. Le module thermostatique additionnel est pourvu d'un élément thermostatique comprenant une coupelle, renfermant une cire thermodilatable actionnant un poussoir en translation en fonction de la température à laquelle la coupelle est soumise. Ainsi, lorsque la température du flux mitigé excède une valeur de seuil prédéterminée, un obturateur est actionné par le poussoir pour obturer le passage d'eau chaude avant son entrée dans la cartouche, afin de limiter automatiquement la température du flux mitigé.

Cet élément thermostatique est fiable et performant au sein des modules additionnels connus, mais peut néanmoins nécessiter un certain savoir-faire pour sa fabrication et sa mise en œuvre.

WO 2015/181237 A1 décrit une cartouche de commande pour un robinet monocommande, comprenant un disque céramique de base formant des entrées d'eau et une sortie d'eau, ainsi qu'un disque de commande, déplacé sous l'action d'un levier pour régler l'ouverture des entrées. Des éléments en alliage à mémoire de forme sont portés par le disque de commande, et sont aptes à déplacer le disque de commande lorsque la température de l'eau est trop élevée, pour refermer les entrées.

Par conséquent, l'invention vise à apporter une alternative à l'art antérieur en proposant une nouvelle unité de mélange fiable et performante, et dont la fabrication est facile.

L'objet de l'invention est défini à la revendication 1.

Grâce à l'invention, l'élément d'actionnement est particulièrement simple à fabriquer et à monter au sein de l'unité de mélange, tout en étant fiable et durable.

Des caractéristiques optionnelles et avantageuses de l'invention sont définies aux revendications 2 à 7.

Un autre objet de l'invention est défini à la revendication 8.

Selon d'autres caractéristiques optionnelles et avantageuses ne faisant pas partie de l'invention, prises seules ou en combinaison :
- l'élément d'actionnement comprend une pièce en spirale sensiblement coaxiale avec l'axe d'obturation, la pièce en spirale présentant une longueur axiale, mesurée le long de l'axe d'obturation, dont la valeur varie lorsque l'élément d'actionnement se déforme entre sa première forme et sa deuxième forme ;
   - - l'élément d'actionnement obture le conduit de logement et l'unité de mélange comprend une garniture statique d'étanchéité de l'obturation du conduit de logement par l'élément d'actionnement ;
- l'élément d'actionnement comprend :
   - une partie périmétrique entourant le conduit de logement et par l'intermédiaire de laquelle l'élément d'actionnement est fixé sur le conduit de logement, et
   - une partie centrale, qui est déplacée, le long de l'axe d'obturation par rapport à la partie périmétrique, lorsque l'élément d'actionnement se déforme entre sa première forme et sa deuxième forme, l'obturateur étant lié en translation à la partie centrale le long de l'axe d'obturation ;
- la translation de l'obturateur est dirigée à l'opposé de la sortie lorsque l'obturateur passe en position d'obturation depuis la position d'ouverture ; et
- la translation de l'obturateur est dirigée vers la sortie lorsque l'obturateur passe en position d'obturation depuis la position d'ouverture.

L'invention sera mieux comprise à la lecture de la description qui va suivre, donnée uniquement à titre d'exemple non limitatif et faite en se référant aux dessins dans lesquels :
- la figure 1 est une vue en perspective du dessous d'une unité de mélange selon un premier mode de réalisation qui ne fait pas partie de l'invention ;
- la figure 2 est une vue en perspective, sous un autre angle, d'un boîtier additionnel appartenant à l'unité de mélange de la figure 1 ;
- la figure 3 est une vue de dessous de l'unité de mélange de la figure 1, orientée selon la flèche III représentée à la figure 1 ;
- la figure 4 est une coupe longitudinale selon le trait de coupe IV-IV représenté sur la figure 3
- les figures 5 à 7 sont des vues de détail, à plus grande échelle, selon le cadre V de la figure 4, représentant l'unité de mélange dans trois configurations distinctes ;
- la figure 8 est une coupe longitudinale selon le trait de coupe VIII-VIII de la figure 3;
- les figures 9 et 10 sont des vues, similaires à celles des figures 5 à 7, d'un boîtier additionnel appartenant à une unité de mélange conforme à un deuxième mode de réalisation qui ne fait pas partie de l'invention, les boîtiers additionnels étant représentés selon deux configurations différentes ;
- les figures 11 à 13 sont des vues, similaires à celles à des figures 9 et 10, d'un boîtier additionnel appartenant à une unité de mélange conforme à un troisième mode de réalisation qui ne fait pas partie de l'invention, les boîtiers additionnels étant représentés selon deux configurations différentes ;
- la figure 14 est une coupe longitudinale d'une variante d'un élément d'actionnement pour l'unité de mélange des figures 11 à 13 ; et
- les figures 15 à 17 sont des coupes transversales d'un module additionnel appartenant à une unité de mélange conforme à un quatrième mode de réalisation, qui est selon l'invention.

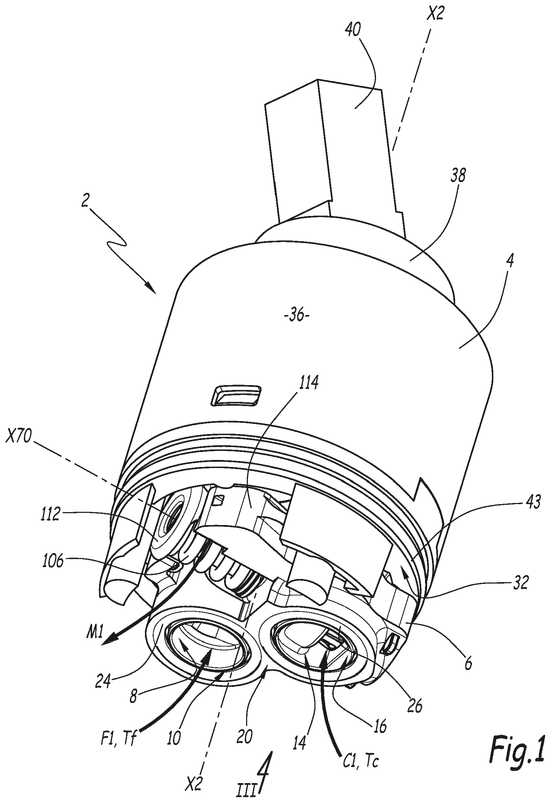

La figure 1 illustre une unité de mélange 2 conçue pour être insérée dans le corps d'un robinet mitigeur 1, non illustré, lui-même préférentiellement conçu pour être installé sur un bac du genre évier ou douche, ou plus généralement au sein d'une installation sanitaire. Le corps présente préférentiellement une forme générale cylindrique et creuse, s'étendant coaxialement avec un axe vertical lorsque le robinet est monté sur le bac. Le robinet mitigeur, comprenant l'unité 2, est conçu pour émettre, sur commande d'un utilisateur, un flux d'eau mitigé à température et débit réglable, via un bec radial saillant du corps du robinet. Le robinet est alimenté axialement, en partie inférieure, par un premier flux entrant d'eau F1, dit «flux d'eau froide », l'eau du premier flux d'eau présentant une première température Tf, et par un deuxième flux entrant d'eau C1, dit « flux d'eau chaude », l'eau du deuxième flux d'eau C1 présentant une deuxième température Tc supérieure à la première température Tf.

L'unité de mélange 2 présente elle-même un axe principal X2 qui est coaxial avec l'axe du robinet lorsque l'unité de mélange est montée au sein de ce dernier. Par commodité, la suite de la description est orientée par rapport à l'axe principal X2, en considérant que les termes « supérieur » et « haut » correspondent à une direction axiale par rapport à l'axe X2, tournée vers la partie haute de la figure 1, tandis que les termes « inférieur » et « bas » correspondent à une direction axiale de sens opposé.

Dans cet exemple, l'unité de mélange 2 comprend deux parties, à savoir une cartouche 4, qui s'étend en partie supérieure, et un boîtier additionnel 6, qui est rapporté sur un côté inférieur 32 de la cartouche 4, en partie inférieure de l'unité de mélange 2. La cartouche 4 présente une forme générale cylindrique définissant l'axe principal X2 de l'unité de mélange 2, avec lequel la cartouche 4 est coaxiale. Le côté inférieur 32 de la cartouche 4 s'étend préférentiellement de façon perpendiculaire par rapport à l'axe X2.

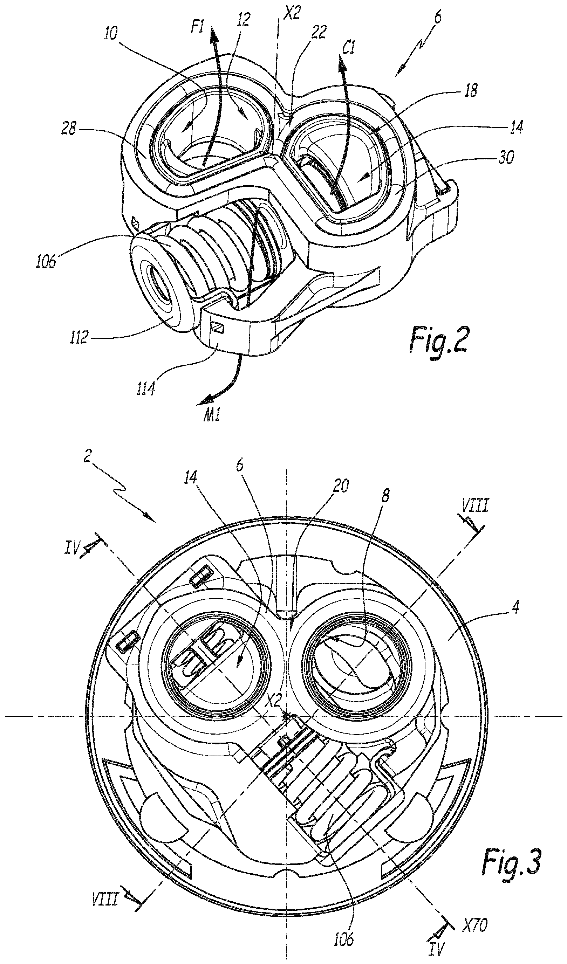

Le boîtier additionnel 6 présente un côté inférieur 20 visible notamment aux figures 1 et 3. Le boîtier 6 présente également un côté supérieur 22 visible à la figure 2, opposé au côté inférieur 20 et généralement parallèle à ce dernier. Lorsque le boîtier 6 est rapporté sur la cartouche 4, les côtés 20 et 22 sont généralement orthogonaux à l'axe X2, et le côté supérieur 22 du boîtier 6 est plaqué contre le côté inférieur 32 de la cartouche 4. Le boîtier 6 est pourvu d'un conduit traversant 8 en sensiblement parallèle à l'axe X2 reliant le côté 20 au côté 22. Le flux d'eau froide F1 est destiné à circuler au travers du conduit 8, depuis une entrée inférieure 10 du conduit traversant 8, débouchant sur le côté inférieur 20 en partie inférieure de l'unité de mélange 2, jusqu'à une sortie intermédiaire 12 du conduit traversant 8, visible à la figure 2, débouchant à l'opposé de l'entrée inférieure 10, sur le côté supérieur 22 du boîtier 6, visible à la figure 2. Le flux d'eau froide F1 traverse ainsi le boîtier 6 par l'intermédiaire du conduit traversant 8, lequel conduit le flux F1 jusqu'à la cartouche 4.

Le deuxième flux entrant d'eau chaude C1 est quant à lui amené dans l'unité de mélange 2 par l'intermédiaire d'un conduit en chicane 14 du boîtier additionnel 6. Le conduit en chicane 14 traverse le boîtier additionnel 6 depuis le côté inférieur 20 jusqu'au côté supérieur 22. En l'espèce, le conduit en chicane 14 présente une entrée inférieure 16 d'admission du flux C1, qui débouche sur le côté inférieur 20, comme visible sur la figure 1. Le conduit en chicane 14 débouche également en partie supérieure du boîtier 6, comme illustré sur la figure 2, au niveau d'une sortie intermédiaire 18 par l'intermédiaire de laquelle le flux C1 est conduit jusqu'à dans la cartouche 4. Les entrées inférieures 10 et 16 sont adjacentes et les sorties intermédiaires 12 et 18 sont adjacentes.

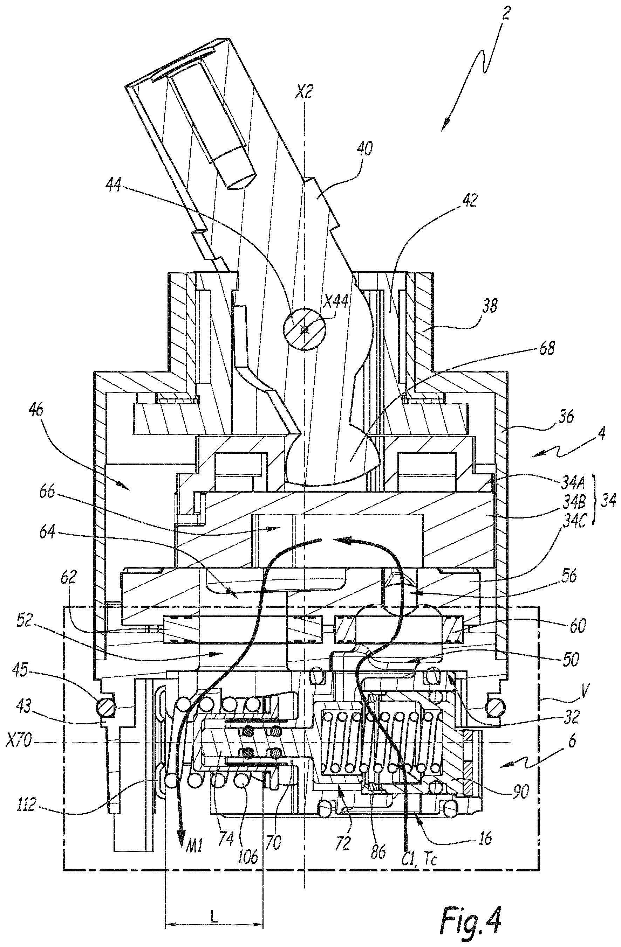

Tel que cela est visible sur les figures 4 à 7, alors que le conduit traversant 8 du boîtier 6 est sensiblement cylindrique et droit, le conduit en chicane 14 comprend :
- une partie amont 78, s'étendant à partir de l'entrée inférieure 16,
- une partie intermédiaire 80, prolongeant la partie amont 78 selon un axe X70 perpendiculaire à l'axe X2,
- une partie aval 82, prolongeant la partie intermédiaire 80 jusqu'à la sortie intermédiaire 18.

En variante non représentée, l'axe X70 n'est pas perpendiculaire à l'axe X2, mais incliné par rapport à ce dernier selon un angle aigu ou obtu.

Lorsque l'unité de mélange 2 est installée dans le robinet, les entrées inférieures 10 et 16 sont connectées fluidiquement à des moyens d'alimentation en eau de l'installation sanitaire, qui débouchent par exemple dans le fond du corps du robinet. Le côté inférieur 20 de la cartouche 4 est pourvu de deux garnitures d'étanchéité statique inférieures 24 et 26, de forme annulaire, entourant respectivement les entrées inférieures 10 et 16 pour assurer l'étanchéité de leur connexion fluidique avec les moyens d'alimentation en eau susmentionnés. De manière générale, on entend par « statique », par opposition à « glissant(e) », que la garniture d'étanchéité concernée est prévue pour être montée entre deux pièces immobiles l'une par rapport à l'autre.

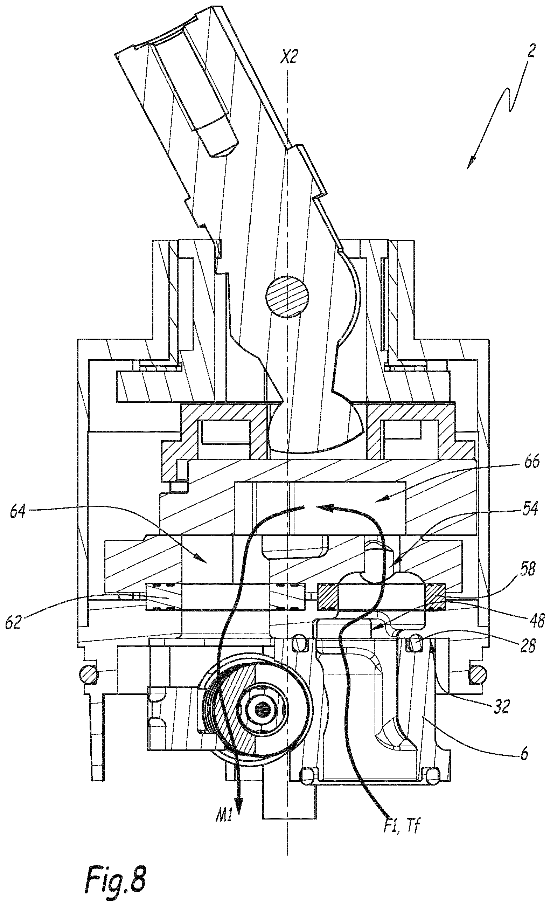

Les conduits 8 et 14 du boîtier 6 sont connectés fluidiquement à la cartouche 4 de façon à alimenter cette cartouche 4 avec les flux F1 et C1, par l'intermédiaire du côté inférieur 32 de la cartouche 4, comme visible sur les figures 4 et 8. Le côté supérieur 22 est pourvu d'une garniture d'étanchéité statique supérieure, formée d'un seul tenant, visible sur la figure 2 et comprenant deux lobes annulaires 28 et 30. Ces derniers entourent respectivement les sorties intermédiaires 12 et 18, afin d'assurer l'étanchéité de la connexion fluidique avec la cartouche 4.

En variante, on peut prévoir deux garnitures d'étanchéité annulaires séparées au lieu de lobes annulaires 28 et 30 venus de matière.

La cartouche 4 comprend une paroi latérale sensiblement cylindrique 36 définissant l'axe X2 et s'élevant à partir du côté inférieur 32. La cartouche 4 comprend aussi une partie supérieure 38, terminant la paroi latérale 36 à l'opposé du côté inférieur 32.

La cartouche 4 comprend également un levier de commande 40, visible en particulier sur la figure 4. Le levier 40 est configuré pour être actionné par un utilisateur du robinet 1, en étant monté sur la partie supérieure 38 de façon mobile par rapport à la paroi latérale 36, par l'intermédiaire d'un organe d'articulation 42. En l'espèce, l'organe d'articulation 42 autorise un pivotement du levier 40 par rapport à la paroi 36 autour de l'axe X2, en formant une pièce pivotante par rapport à la partie supérieure 38, autour de l'axe X2. Le levier 40 est lui-même monté pivotant sur l'organe d'articulation 42 par l'intermédiaire d'une liaison pivot 44, autorisant un pivotement du levier 40 autour d'un axe X44, perpendiculaire à l'axe X2, par rapport à l'organe 42.

La cartouche 4 renferme une chambre de mélange interne 46 visible notamment sur la figure 4, qui est délimitée notamment par le côté inférieur 32, la paroi latérale cylindrique 36, la partie supérieure 38, l'organe d'articulation 42 et le levier 40. La chambre de mélange 46 contient des moyens de mélange 34 du premier flux entrant F1 et du deuxième flux entrant C1 pour former, au sein de la cartouche 4, un flux sortant M1, dit « flux mitigé », présentant une température de sortie Tm.

Le côté inférieur 32 de la cartouche 4 est traversé par une première entrée 48, visible sur la figure 8, et par une deuxième entrée 50, visible sur les figures 4 à 7, débouchant toutes deux au sein de la chambre 46. L'entrée 48 est fluidiquement connectée à la sortie intermédiaire 12, alors que l'entrée 50 est fluidiquement connectée à la sortie intermédiaire 18, lorsque le côté inférieur 32 de la cartouche 4 est en contact étanche avec le côté supérieur 22 du boîtier 6. Les entrées 48 et 50 sont mises respectivement en regard avec les sorties 12 et 18. Les flux F1 et C1 sont ainsi admis au sein de la chambre de mélange 46 respectivement via les entrées 48 et 50.

Le côté inférieur 32 est également traversé par une sortie 52 pour le flux sortant M1, débouchant d'une part dans la chambre de mélange 46, et d'autre part du côté du boîtier 6. Les entrées 48 et 50 ainsi que la sortie 52 sont réparties autour de l'axe X2.

Dans l'exemple illustré, les moyens de mélange 34 comprennent un ensemble de disques de mélange 34A, 34B et 34C, qui sont contenus dans la chambre de mélange 46, comme cela est visible sur les figures 4 à 8. Les disques de mélange 34A, 34B et 34C sont en contact surfaciques les uns avec les autres et s'étendent dans des plans perpendiculaires à l'axe principal X2. L'ensemble de disques de mélange comprend un disque supérieur 34A, un disque intermédiaire 34B et un disque inférieur 34C, les disques supérieur 34A et intermédiaire 34B étant mobiles par rapport au disque 34C qui est fixe par rapport au côté inférieur 32. Le disque inférieur 34C comprend un premier conduit d'entrée 54 le traversant et étant fluidiquement connecté à la première entrée 48 à l'aide d'une garniture d'étanchéité statique 58, comme cela est visible à la figure 8. Le disque inférieur 34C comprend également un deuxième conduit d'entrée 56 le traversant et étant fluidiquement connecté à la deuxième entrée 50 à l'aide d'une garniture d'étanchéité statique 60, comme cela est visible aux figures 4 à 7. Le disque inférieur 34C comprend enfin un conduit de sortie 64 le traversant et étant fluidiquement connecté à la sortie 52 à l'aide d'une garniture d'étanchéité statique 62, comme cela est visible aux figures figure 4 à 8. Le disque intermédiaire 34B est en contact glissant et étanche avec le disque 34C et comprend une ouïe borgne 66 ouverte vers le bas sur le disque 34C. L'ouïe borgne 66 est ainsi reliée fluidiquement à l'un ou plusieurs des conduits 54, 56 et 64, avec un degré d'occlusion variable en fonction de la position et de l'orientation du disque 34B par rapport au disque 34C. Plus précisément, le disque 34B obture en particulier au moins les conduits 54 et 56 avec un degré variable, ce degré dépendant de la position du disque 34B par rapport aux conduits 54, 56 et 64, du fait de la forme de ces derniers et de celle de l'ouïe 66 elle-même. L'ouïe borgne 66 est configurée pour mettre en communication, en fonction de sa position, les conduits 54 et 56 avec le conduit 64. Ainsi, en fonction de la position relative des disques 34B et 34C, le débit respectif des flux entrants F1 et C1 admis au sein de la chambre 46 est réglé.

Comme cela est représenté sur les figures 4 et 8, les flux entrants F1 et C1 circulent au travers du disque inférieur 34C de bas en haut, puis dans le disque intermédiaire 34B, au sein duquel ils se mélangent pour former le flux mitigé M1. Ce dernier est dirigé vers le bas, au travers du disque inférieur 34C. Le rapport et la valeur des débits des flux entrants F1 et C1 permet de régler à la fois la température Tm et le débit du flux sortant M1. Une étanchéité des connexions fluidiques entre les disques 34B et 34C peut être assurée en dépit de la mobilité du disque 34B en utilisant une céramique adaptée pour les constituer, de façon connue en tant que telle. Le disque 34A forme quant à lui un moyen de transmission entre une patte inférieure 68 du levier 40 et le disque 34B, de sorte que la mise en mouvement du levier 40 entraîne un mouvement correspondant du disque 34B par rapport à la paroi 36 de la cartouche 4. De préférence, le disque 34A est solidaire du disque 34B, mais est constitué dans un matériau différent de celui du disque 34B et adapté à encaisser les mouvements imposés par le levier 40. Le disque 34B est ainsi entraîné en rotation autour d'un axe parallèle à l'axe X2 lors d'une rotation du levier autour de l'axe X2, ce qui permet de régler le rapport des débits des flux entrants F1 et C1 pour régler la température Tm. Le disque 34B est entraîné en translation selon une direction perpendiculaire à l'axe X2 lorsque le levier 40 est pivoté autour de l'axe X44, ce qui fait varier la valeur du débit du flux sortant M1. Si l'on préfère la mise en œuvre d'une chambre de mélange à disques céramiques telle que décrite dans ce qui précède, on comprend que tous moyens de mélange connus et habituellement mis en œuvre dans les cartouches pour robinets mitigeurs peuvent être utilisés à la place. Dans tous les cas, le robinet mitigeur et la cartouche 4 peuvent être qualifiés de « monocommandes » dans la mesure où un seul levier 40 permet de commander à la fois le débit et la température Tm du flux sortant M1 par réglage des débits des flux entrants F1 et C1, présentant une température respective Tf et Tc de valeur différente.

La cartouche 4 comprend une couronne d'étanchéité 43, visible à la figure 1, pourvue d'une garniture d'étanchéité statique 45, circulaire et externe, visible à la figure 1, la couronne d'étanchéité 43 faisant saillie du côté inférieur 32 de la cartouche 4, de façon coaxiale avec l'axe X2. La couronne d'étanchéité 43 forme ainsi une jupe qui entoure partiellement le boîtier 6, et qui vient dans le prolongement de la forme cylindrique de la paroi 36. La garniture 45 est ainsi en contact étanche avec le corps du robinet, de forme cylindrique complémentaire, de sorte que la cartouche 4 et le fond du corps du robinet délimitent une chambre inférieure étanche, dans laquelle le boîtier 6 est contenu, le bec du robinet étant fluidiquement connecté à ladite chambre inférieure. Le flux sortant M1 formé par mélange au sein de la chambre de mélange 46 est évacué hors de cette dernière via la sortie 52, sous la pression des flux entrants F1 et C1, et hors de la cartouche 4, jusque dans la chambre inférieure du robinet, pour être ensuite conduit hors du robinet via le bec.

Tel que cela est visible sur les figures 4 à 7, le boîtier 6 comprend un conduit de logement 70, de forme sensiblement cylindrique à base circulaire, prolongeant la partie intermédiaire 80 du conduit en chicane 14 selon l'axe X70, entre le côté inférieur 20 et le côté supérieur 22, jusqu'à déboucher dans la chambre inférieure du robinet, lorsque l'unité 2 est montée au sein de ce dernier. En d'autres termes, le conduit de logement 70 relie la deuxième entrée 50 à la sortie 52. Le conduit de logement 70 s'étend le long de l'axe X70 de façon saillante par rapport au conduit 14, de sorte qu'une extrémité libre du conduit de logement 70 se situe axialement par-delà la sortie 52, sans toutefois dépasser la couronne d'étanchéité 43.

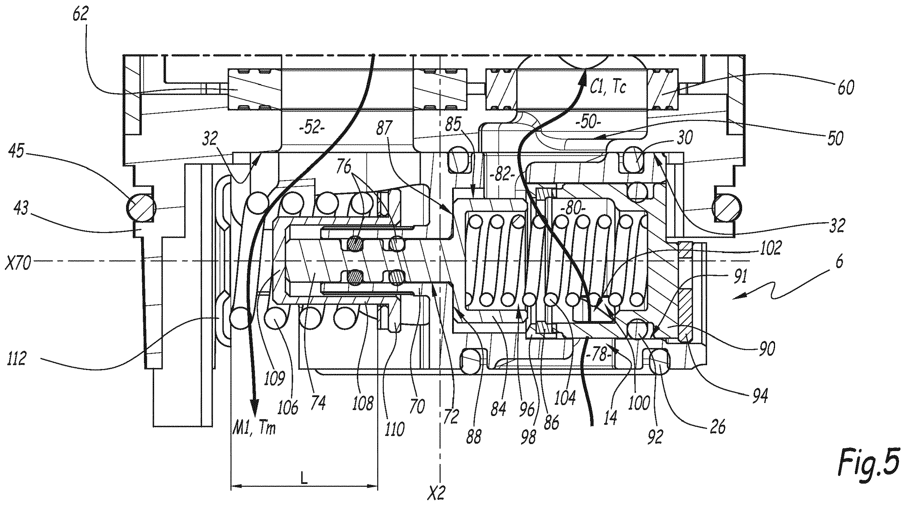

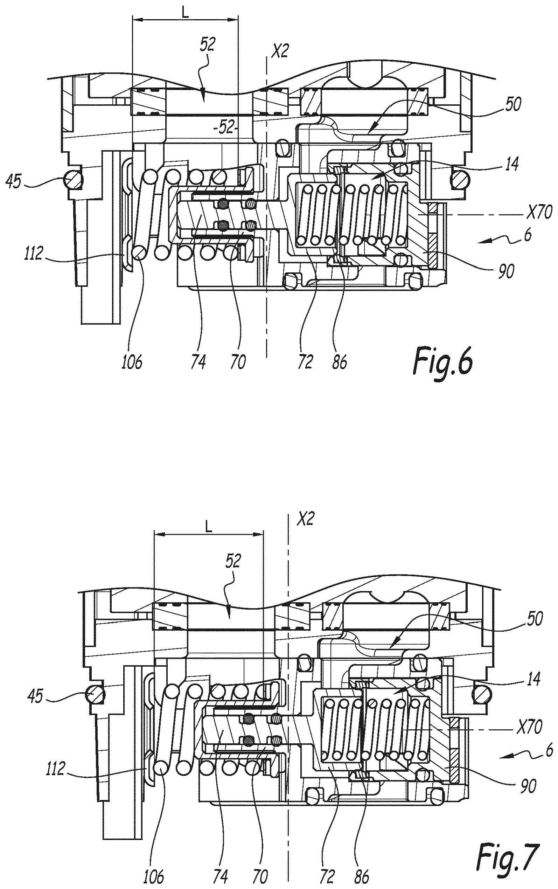

Le boîtier 6 comprend un obturateur 72, qui est mobile en translation par rapport aux conduits 14 et 70, selon l'axe X70, dit « d'obturation », entre une position d'ouverture de la deuxième entrée 50, représentée à la figure 5, une position d'obturation de la deuxième entrée 50, représentée à la figure 6, et une position de surcourse, représentée à la figure 7.

L'obturateur 72 comprend une tête d'obturation 84, présentant une surface radiale externe cylindrique 85, coaxiale avec l'axe X70, de forme complémentaire avec un col d'obturation 86 du conduit en chicane 14.

Le col 86 est coaxial avec l'axe X70 et fait saillie dans la partie intermédiaire 80 du conduit 14. Dans ce mode de réalisation des figures 1 à 8, le col 86 forme une garniture glissante d'étanchéité qui est fixée dans le conduit 14. On entend par « glissant(e) », par opposition à « statique », que la garniture d'étanchéité concernée est apte à être en contact glissant et/ou frottant contre au moins un organe mobile tout en assurant une étanchéité fluidique par contact avec ce dernier. Dans le cas d'espèce, le col 86 est apte à assurer l'étanchéité en glissant contre la tête 84 mobile.

Pour fixer le col, l'unité 2 comprend un bouchon 90. En l'espèce, à l'opposé du conduit de logement 70, le long de l'axe X70, la partie intermédiaire 80 débouche à l'extérieur du boîtier 6 au niveau d'un orifice traversant 91, lequel est bouché par le bouchon 90, de façon étanche grâce à une garniture d'étanchéité statique 92. Le col 86 est fixé dans le conduit 14 axialement le long de l'axe X70, entre une bague de maintien 98 et ce bouchon 90. Une plaque d'arrêt 94, liée en translation avec le conduit en chicane 14 le long de l'axe X70, maintient le bouchon 90 au sein du conduit en chicane 14 le long de l'axe X70.

En variante, le bouchon 90 est fixé au conduit en chicane 14 par soudage ou collage, par exemple à l'aide d'un cordon annulaire de soudure ou de colle interposé entre le bouchon 90 et l'orifice traversant 91, remplaçant la garniture d'étanchéité 92 et assurant ainsi l'étanchéité de l'obturation de l'orifice traversant 91 par le bouchon 90.

En position d'ouverture, représentée figure 5, la tête d'obturation 84 est distante du col 86 de façon à ménager un espace interstitiel de passage du flux C1 entre la tête 84 et le col 86, de sorte que l'entrée 50 est dite « ouverte ». La tête d'obturation 84 forme un épaulement externe 87, à une première extrémité axiale de la surface 85, l'épaulement 87 étant configuré pour entrer en contact avec une butée 88, formée par une surface axiale reliant le conduit de logement 70 à la partie intermédiaire 80 du conduit en chicane 14.

En étant translaté à l'écart de la sortie 52 selon l'axe X70, l'obturateur 72 atteint la position d'obturation, représentée à la figure 6. Dans cette position, la tête d'obturation 84 entre en contact étanche avec le col 86 à une deuxième extrémité axiale de la surface 85 opposée à l'épaulement 87. Ainsi, que la partie intermédiaire 80 du conduit en chicane 14 est obturée par cette deuxième extrémité axiale de la tête 84, le passage du flux C1 étant au moins partiellement interrompu, de sorte que l'entrée 50 est dite « obturée ».

La translation de l'obturateur 72 est ainsi dirigée à l'opposé de la sortie 52 lorsque l'obturateur 72 passe en position d'obturation depuis la position d'ouverture.

En s'écartant davantage de la sortie 52, l'obturateur 72 atteint la position de surcourse, dans laquelle la tête d'obturation 84 est entourée de façon étanche par le col 86, et passe au travers de ce dernier. En l'espèce, le col 86 enserre la surface 85 de façon étanche entre les deux extrémités axiales de cette dernière. Dans cette position de surcourse, l'entrée 50 est également obturée. Les postions d'ouverture et de surcourse correspondent ainsi à des positions extrémales de l'obturateur 72, alors que la position d'obturation constitue une position intermédiaire.

L'obturateur 72 est monté coulissant entre les positions ouverte, d'obturation et de surcourse par l'intermédiaire d'un poussoir 74, formé par une tige montée coulissante selon l'axe X70 dans le conduit 70. Le poussoir 74 s'étend à partir de l'épaulement 87 de la tête d'obturation 84 et est préférentiellement de diamètre inférieur à cette dernière. Le poussoir 74 s'étend donc au moins partiellement dans le conduit de logement 70. De manière avantageuse, le poussoir 74 présente une section transversale, par rapport à l'axe X70, la plus faible possible, afin de limiter l'effet de la pression des flux C1 et M1 sur la position de l'obturateur 72.

L'obturateur 72 comprend une garniture d'étanchéité glissante 76, formée dans cet exemple par deux joints toriques, entourant le poussoir 74 autour de l'axe X70. La garniture 76 est interposée entre le conduit de logement 70 et le poussoir 74, de sorte que le poussoir 74 obture de façon étanche le conduit de logement 70 et prévient sensiblement tout échappement de fluide provenant du flux C1 vers la sortie 52, c'est-à-dire vers la chambre inférieure du robinet. La garniture glissante 76 est solidaire de l'obturateur 72 et glisse contre le conduit 70 lors de la translation de l'obturateur 72 entre les différentes positions.

Comme illustré aux figures 5 à 7, l'obturateur 72 comprend une forme en creux 96 borgne, généralement cylindrique, coaxiale avec l'axe X70 et débouchant à la deuxième extrémité de la tête d'obturation 84, dans le conduit en chicane 14. Le bouchon 90 comprend également une forme en creux 100, généralement cylindrique coaxiale avec l'axe X70, débouchant en regard de la forme en creux 96. Un orifice latéral 102 est ménagé dans le bouchon 90 pour permettre le passage du flux C1 depuis la partie amont 78 jusqu'à la forme en creux 100, puis au travers du col 86 jusqu'à la partie aval 82, si l'obturateur 72 est en position ouverte.

Le boîtier 6 comprend un organe de rappel élastique de l'obturateur 72 depuis sa position de surcourse, ainsi que depuis sa position d'obturation, vers sa position d'ouverture. Dans ce mode de réalisation, l'organe de rappel est formé par un ressort 104 de compression, qui est coaxial avec l'axe X70 et s'étend au sein des formes en creux 96 et 100. Le ressort 104 est ainsi étant interposé entre le bouchon 90 et l'obturateur 72 et impose par élasticité des efforts, antagonistes le long de l'axe X70, qui ont tendance à éloigner l'obturateur 72 du bouchon 90.

Le boîtier 6 comprend également un élément d'actionnement 106 visible notamment aux figures 5 à 7, qui est disposé en aval de la sortie 52, c'est-à-dire dans la chambre inférieure du robinet, sur le passage du flux sortant M1. Dans ce mode de réalisation des figures 1 à 8, l'élément d'actionnement 106 est formé par une pièce en spirale, du genre ressort, sensiblement coaxiale avec l'axe d'obturation X70. L'élément d'actionnement 106 est enfilé autour d'un capuchon coulissant 108, lui-même enfilé sur la partie saillante du conduit de logement 70, de façon coulissante le long de l'axe X70. Le capuchon 108 est pourvu d'une paroi axiale 109 d'appui sur une extrémité libre du poussoir 74, laquelle dépasse du conduit de logement 70. Le capuchon 108 peut ainsi appuyer sur le poussoir 74 en direction du conduit en chicane 14. L'élément d'actionnement 106 actionne donc l'obturateur 72 par l'intermédiaire du poussoir 74. Le capuchon 108 est pourvu d'une collerette extérieure 110 contre laquelle une première extrémité de l'élément d'actionnement 106 est en appui axial. Une autre extrémité de l'élément d'actionnement 106 est en appui axial contre un étrier 112, fixé en translation par rapport au conduit en chicane 14 le long de l'axe X70, via une structure de support 114 du boîtier 6 visible sur les figures 1 et 2. La structure de support 114 forme deux bras solidaires respectivement des conduits 8 et 14, chaque côté de l'étrier 112 étant maintenu sur l'un de ces bras.

La pièce en spirale formant l'élément d'actionnement 106 est constituée d'un alliage à mémoire de forme, du genre alliage Titane-Nickel. En d'autres termes, l'élément d'actionnement 106 est formé par un alliage métallique qui présente préférentiellement deux phases cristallographiques dépendant de la température, en l'espèce une première phase à basse température où l'élément 106 il est suffisamment élastique pour être déformé sous l'action du ressort 104 et une phase à haute température où l'élément 106 est suffisamment rigide pour retrouver sa forme initiale à l'encontre du ressort 104. Grâce à ce matériau, la pièce 106 présente une longueur axiale L, mesurée le long de l'axe d'obturation X70, dont la valeur varie de façon réversible sous l'effet combiné du ressort 104 et de la température à laquelle l'élément d'actionnement 106 est soumis, et en l'espèce de la température Tm du flux M1 s'échappant de la sortie 52. Ainsi, en fonction de la température Tm, l'élément d'actionnement se déforme entre :
- une première forme, représentée à la figure 5, dans laquelle la longueur L est à une valeur minimale, et obtenue lorsque la valeur de la température Tm est inférieure à un seuil critique,
- une deuxième forme, représentée à la figure 6, dans laquelle la longueur L est intermédiaire, et obtenue lorsque la valeur de la température Tm atteint le seuil critique, et
- une troisième forme, représentée à la figure 7, dans laquelle la longueur L atteint une valeur maximale, et obtenue lorsque la température Tm excède le seuil critique.

La valeur du seuil critique dépend principalement de l'alliage à mémoire de forme utilisé. Le seuil critique est choisi par exemple à environ 50°C (degrés Celsius). Il est possible que la valeur du seuil critique varie par effet d'hystérésis. Des éléments complémentaires tels que l'application d'efforts additionnels à ceux du ressort 104, tels que des efforts de frottement ou des efforts induits par les pressions des flux C1 et M1, sur l'élément d'actionnement 106, sont susceptibles de faire varier sa forme et donc les valeurs de la longueur L.

En tout état de cause, l'élément d'actionnement 106 est configuré pour exercer des efforts antagonistes sur l'étrier 112 et le capuchon 108 de façon à pousser l'obturateur 72 depuis sa position d'ouverture vers ses positions d'obturation et de surcourse, à l'encontre de la force de rappel du ressort 104, en fonction de la température Tm. Ainsi, lorsque la température Tm atteint le seuil critique, l'élément d'actionnement 106 se déforme selon sa deuxième forme, qui correspond à une mise en position d'obturation de l'obturateur 72. Si la température Tm est supérieure à la valeur du seuil critique, l'élément d'actionnement 106 se déforme selon sa troisième forme et entraîne ainsi l'obturateur 72 jusqu'à la position de surcourse. A l'inverse, si la température Tm est abaissée en dessous du seuil critique, l'élément d'actionnement 106 se déforme selon sa première forme, autorisant le passage de l'obturateur 72 jusqu'à la position d'ouverture, sous l'effet de rappel élastique du ressort 104.

Lorsque la température Tm atteint le seuil prédéterminé, le flux C2 est totalement, ou au moins partiellement, interrompu par obturation de la deuxième entrée 50, tel qu'illustré aux figures 7 et 8.

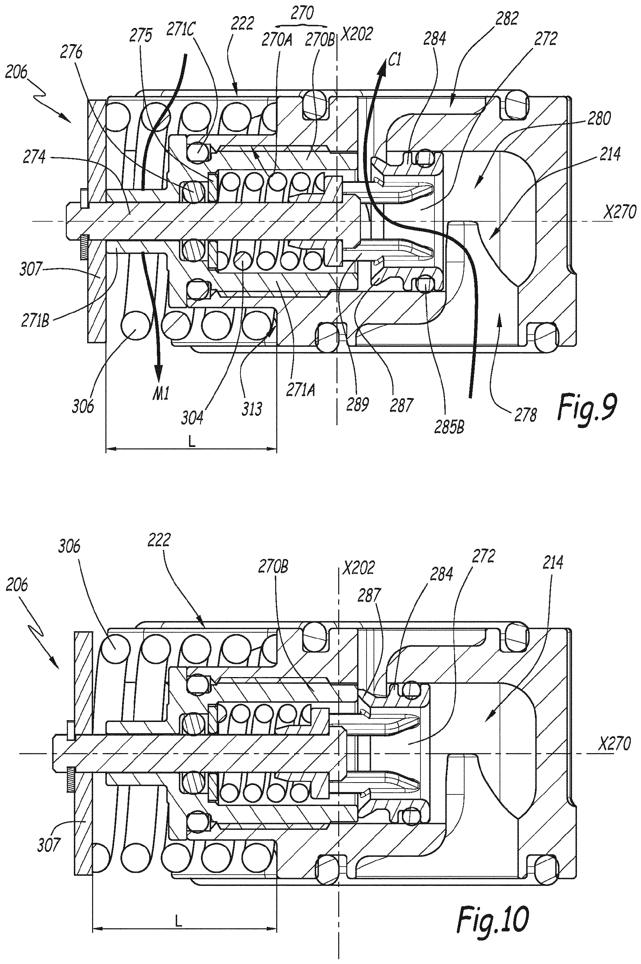

L'unité de mélange du deuxième mode de réalisation représenté aux figures 9 et 10 présente des caractéristiques similaires avec l'unité de mélange 2 du premier mode de réalisation décrit ci-avant et illustré aux figures 1 à 8. Les caractéristiques similaires du premier et du deuxième modes de réalisation susmentionnés sont désignées par un tracé similaire sur le dessin, et/ou des numéros de référence augmentés de 200.

L'unité de mélange du deuxième mode de réalisation des figures 9 et 10 comprend une cartouche préférentiellement identique à la cartouche 4 décrite pour le premier mode de réalisation, de sorte que la cartouche n'est pas représentée sur les figures 9 et 10, mais simplement symbolisée par un axe principal X202 correspondant à l'axe X2. La description qui suit est donc centrée principalement sur les différences entre le premier et le deuxième mode de réalisation.

L'unité de mélange du deuxième mode de réalisation comprend un boîtier additionnel 206. La cartouche non illustrée est connectée fluidiquement au boîtier 206 par l'intermédiaire du côté supérieur 222 de ce dernier.

Le boîtier additionnel 206 comprend un conduit traversant non visible aux figures 9 et 10 mais similaire à celui décrit ci-avant, et un conduit en chicane 214 visible sur les figures 9 et 10. Le conduit en chicane 214 comprend une partie intermédiaire 280 coaxiale avec un axe d'obturation X270 perpendiculaire à l'axe X2 de la cartouche. A la différence du premier mode de réalisation, le conduit en chicane 214 est dépourvu de bouchon et est formé d'un seul tenant.

Le boîtier 206 comprend également un conduit de logement 270 coaxial avec l'axe X270. A la différence du premier mode de réalisation, le conduit de logement 270 est réalisé par assemblage. En l'espèce, le boîtier 6 comprend un conduit de base 270A, prolongeant la partie intermédiaire 280 sans réduction de section le long de l'axe X270, et débouchant à la sortie de la cartouche. Le conduit de base 270A est venu de matière avec le conduit en chicane 214. Un taraudage coaxial avec l'axe X270 est ménagé le long de ce conduit de base 270A, pour permettre le vissage d'un conduit rapporté 270B en son sein. Le conduit rapporté 270B inclut une première partie 271A par l'intermédiaire de laquelle elle est vissée dans le conduit de base 270A. Une garniture d'étanchéité statique 271C assure l'étanchéité de ce vissage. Le conduit rapporté 270B inclut également une deuxième partie 271B de section intérieure réduite, s'étendant dans le passage du flux sortant M1, à l'opposé de la partie intermédiaire 280, et débouchant en son extrémité.

Le boîtier 206 comprend un obturateur 272, qui est mobile en translation selon l'axe d'obturation X270, entre une position d'ouverture représentée sur la figure 9 et une position d'obturation représentée sur la figure 10, de la deuxième entrée de la cartouche non illustrée. Dans ce deuxième mode de réalisation, la translation de l'obturateur 272 est dirigée vers la sortie lorsque l'obturateur 272 passe en position d'obturation depuis la position d'ouverture, contrairement au premier mode de réalisation. Ainsi, l'influence de la pression du flux C1 sur la position de l'obturateur 272 est moins importante.

Plus précisément, l'obturateur 272 comprend une tête d'obturation 284, en forme de cylindre creux coaxial avec l'axe X270. La tête d'obturation 284 présente une première extrémité 287, tournée en direction du conduit de logement 270, apte à venir en butée axiale étanche avec le conduit rapporté 270B en position d'obturation, et à être écartée de ce conduit rapporté 270B en position d'ouverture. L'obturateur 272 ne présente pas de position de surcourse, contrairement au premier mode de réalisation, la tête 284 arrivant en butée axiale contre le conduit rapporté 270B en position de fermeture. La tête 284 et le conduit 270B assurent une étanchéité « d'appui », c'est-à-dire, par opposition à une étanchéité glissante ou statique, une étanchéité entre deux organes dont au moins l'un est mobile, sans toutefois glisser contre le deuxième, mais en venant simplement en appui contre ce dernier.

Dans le présent exemple, les extrémités en contact du conduit rapporté 270B et de la tête 284 sont dépourvues de garniture rapportée. Cependant, une garniture d'étanchéité d'appui peut optionnellement être prévue.

La tête d'obturation 284 présente également une deuxième extrémité ouverte, opposée à la première extrémité 287, par l'intermédiaire de laquelle le flux C1 peut s'introduire à l'intérieur de la tête 284, de façon à circuler jusqu'à la première extrémité 287. Si l'obturateur 272 est en position ouverte, le flux C1 passe entre la première extrémité 287 et le conduit rapporté 270B, jusque dans la partie aval 282. Une garniture d'étanchéité glissante 285B, fixée en périphérie de la tête 284 à proximité de la deuxième extrémité de cette dernière, assure une obturation, en amont de la partie aval 282, de la partie intermédiaire 280 par la tête 284 en position d'obturation.

De plus, l'obturateur 272 comprend un poussoir 274 par l'intermédiaire duquel il est monté coulissant selon l'axe X270 dans la partie 271B. Le poussoir 274 s'étend au moins partiellement dans le conduit de logement 270. Une garniture d'étanchéité glissante 276, formée dans cet exemple par un seul joint, préférentiellement torique, assure une obturation étanche de la partie 271B par le poussoir 274. La garniture 276 est fixe en translation par rapport au conduit de logement 270, en étant maintenue axialement dans une gorge de la partie 271B par une rondelle 275. La tête 284 comporte des pattes 289 par l'intermédiaire desquelles elle est fixée au poussoir 274, tout en autorisant le passage du flux C1 entre l'extrémité 287 et le conduit rapporté 270B en position ouverte. Un ressort de rappel 304 est interposé entre la rondelle 275 et la tête 284, de façon à ramener par élasticité l'obturateur 272 depuis sa position d'obturation vers sa position d'ouverture.

L'unité de mélange des figures 9 et 10 comprend également un élément d'actionnement 306 en spirale, constitué d'un alliage à mémoire de forme, de façon similaire au premier mode de réalisation des figures 1 à 8. Cet élément d'actionnement 306 est enfilé coaxialement à l'axe X270 autour du conduit 270 de façon à être disposé au moins partiellement à la sortie de la cartouche. En particulier, l'élément d'actionnement 306 est monté entre une rondelle de butée 307 solidaire de l'extrémité saillante du poussoir 274, et un épaulement externe 313 du conduit de base 270A de façon à écarter la rondelle 307, et donc l'obturateur 272, de l'épaulement 313 lors de son passage de la première forme à la deuxième forme, à l'encontre du ressort de rappel 304. L'élément d'actionnement 306 actionne donc l'obturateur 272 via le poussoir 274.

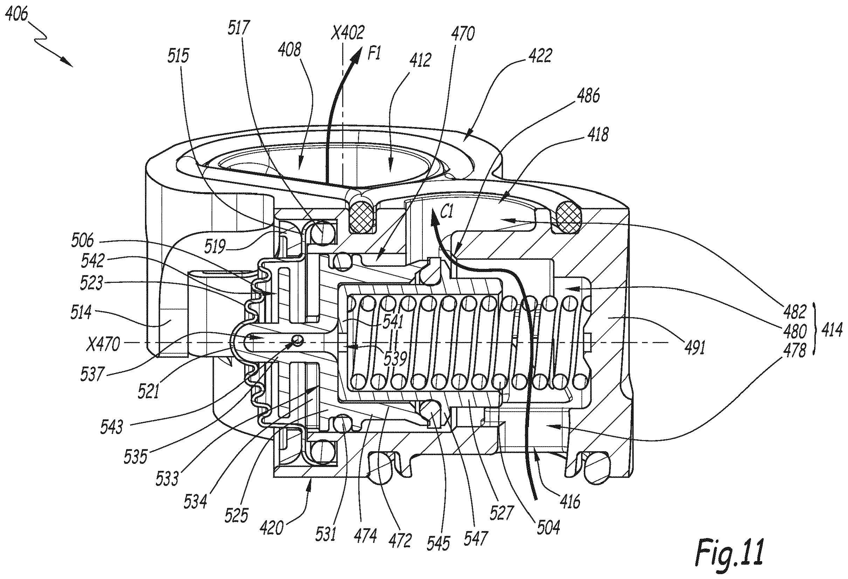

L'unité de mélange du troisième mode de réalisation représenté aux figures 11 à 13 présente des caractéristiques similaires avec l'unité de mélange 2 du premier mode de réalisation décrit ci-avant et illustré aux figures 1 à 8. Les caractéristiques similaires du premier et du troisième modes de réalisation susmentionnés sont désignées par un tracé similaire sur le dessin, et/ou des numéros de référence augmentés de 400.

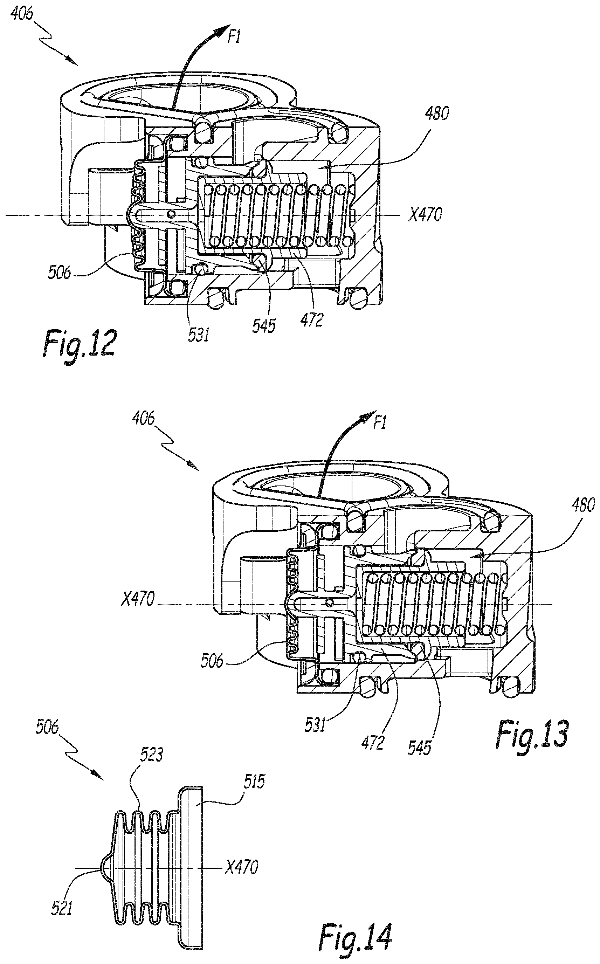

L'unité de mélange du troisième mode de réalisation des figures 11 à 13 comprend une cartouche préférentiellement identique à la cartouche 4 décrite pour le premier mode de réalisation, de sorte que la cartouche n'est pas représentée sur les figures 11 et 13, mais simplement symbolisée par un axe principal X402 correspondant à l'axe X2. La description qui suit est donc centrée principalement sur les différences entre le premier et le troisième mode de réalisation.

L'unité de mélange du troisième mode de réalisation des figures 11 à 13 comprend un boîtier additionnel 406 présentant un côté inférieur 420 et un côté supérieur 422. La cartouche, non illustrée, est fluidiquement connectée au boîtier 406 par l'intermédiaire du côté 422. Le boîtier additionnel 406 inclut un conduit traversant 408 avec une entrée inférieure, non visible sur les figures, débouchant en surface du côté inférieur 420, et une sortie intermédiaire 412 débouchant en surface du côté 422. Le boîtier additionnel 406 comprend également un conduit en chicane 414, avec une entrée inférieure 416 débouchant sur le côté inférieur 420 et une sortie intermédiaire 418 débouchant sur le côté supérieur 422.

Le conduit en chicane 414 inclut une partie amont 478, une partie intermédiaire 480 et une partie aval 482. Dans ce troisième mode de réalisation, le boîtier 406 ne comporte pas de bouchon 90 ni d'orifice traversant 91, contrairement au premier mode de réalisation. A la place, la partie intermédiaire 480 est obturée par une paroi de fond 491 qui est venue de matière avec le reste du conduit en chicane 414.

Le boîtier 406 comprend également un conduit de logement 470 qui s'étend coaxialement avec un axe d'obturation X470, l'axe X470 étant lui-même coaxial avec la partie intermédiaire 480 du conduit en chicane 414. Le conduit de logement 470 débouche à la sortie, non représentée, de la cartouche.

Le boîtier additionnel 406 comprend également un élément d'actionnement 506 constitué d'un alliage à mémoire de forme. L'élément d'actionnement 506 présente une forme de disque ou de cône déformable entre une première forme représentée à la figure 11, une deuxième forme représentée à la figure 12 et une troisième forme représentée à la figure 13. Grâce à sa forme de disque ou de cône, l'élément d'actionnement 506 forme un capuchon et obture le conduit de logement 470, en étant rapporté sur l'extrémité ouverte de ce dernier.

Plus précisément, l'élément d'actionnement 506 comprend une partie périmétrique 515 qui entoure l'extrémité ouverte du conduit de logement 470 et par l'intermédiaire de laquelle l'élément d'actionnement 506 est fixé sur ce conduit de logement 470. En pratique, la partie périmétrique 515 est en appui axial le long de l'axe X470 contre une garniture d'étanchéité statique 517, formée par exemple par un seul joint torique disposé coaxialement par rapport à l'axe X470, autour du conduit de logement 470.

Un étrier 519 maintient la partie périmétrique 515 axialement le long de l'axe X470 contre la garniture 517, laquelle permet d'assurer l'étanchéité de l'obturation du conduit de logement 470 par l'élément d'actionnement 506. L'étrier 519 forme une pièce annulaire ou en U qui est axialement solidaire d'une structure de support 514 similaire à la structure de support 114 décrite ci-avant pour le premier mode de réalisation.

L'élément d'actionnement 506 comprend également une partie centrale 521 centrée sur l'axe X470, à l'intérieur de la partie périmétrique 515, et reliée à cette dernière par une surface déformable 523 de l'élément d'actionnement 506. La surface déformable 523 forme en pratique une surface continue en accordéon, comme illustré sur les figures 11 à 13, ou en soufflet comme illustré en variante sur la figure 14. Lorsque l'élément 506 se déforme entre sa première forme, sa deuxième forme et sa troisième forme, la partie centrale 521 est déplacée, sous l'action de la surface déformable 523, le long de l'axe d'obturation X470 par rapport à la partie périmétrique 515 comme cela est représenté sur les figures 11, 12 et 13. Dans le cas des figures 11 à 13, la surface déformable 523 évolue depuis une forme conique visible à la figure 11 jusqu'à une forme discoïde visible à la figure 13, de façon à rapprocher la partie centrale 521 de la partie intermédiaire 480 lorsque l'élément d'actionnement 506 évolue depuis sa première forme vers sa deuxième forme et sa troisième forme.

Le boîtier additionnel 406 comprend également un obturateur 472 comprenant une pièce externe 525 et une pièce interne 527, lesquelles sont coaxiales avec l'axe X470, la pièce interne 527 étant de forme générale cylindrique et étant emboîtée au sein de la pièce externe 525. La pièce externe 525 comprend une paroi cylindrique 474, entourant partiellement la pièce externe 525 et par l'intermédiaire de laquelle l'obturateur 472 est monté coulissant le long de l'axe X470 dans le conduit de logement 470. La pièce externe 525 et sa paroi cylindrique 474 forment ainsi un poussoir appartenant à l'obturateur 472, le poussoir s'étendant dans le conduit de logement 470. Une garniture d'étanchéité glissante 531, formée par exemple par un seul joint torique, est prévue entre la paroi cylindrique 474 et le conduit de logement 470, de sorte que l'obturateur 472 est en contact étanche et glissant avec la conduite de logement 470. La pièce externe 525 comprend également un épaulement 533, qui s'étend à partir d'une première extrémité de la paroi cylindrique 474. Une nervure 534 fait saillie de l'épaulement de façon à venir en butée axiale contre la partie périmétrique 515 de l'élément d'actionnement 506 et ainsi définir une position d'ouverture de l'obturateur 472 représenté à la figure 11.

La pièce externe 525 comprend également une partie de transmission 535 qui relie l'épaulement 533 à la partie centrale 521 de l'élément d'actionnement 506. L'élément d'actionnement 506 est ainsi apte à faire translater le long de l'axe X470 l'obturateur 472 par l'intermédiaire de la partie de transmission 535, l'obturateur 472 étant lié en translation à la partie centrale 521 le long de l'axe d'obturation X470. En pratique, la partie de transmission 535 présente un diamètre inférieur à celui de la paroi cylindrique 474 et comprend un canal interne 537, qui est fluidiquement connecté à la partie intermédiaire 480 du conduit en chicane 414 par l'intermédiaire d'un orifice traversant 539 ménagé dans une paroi de fond 541 de la pièce interne 527. La partie de transmission 535 comprend un orifice traversant radial 543 qui débouche dans une chambre 542 délimitée par l'épaulement 533 et l'élément d'actionnement 506. La partie intermédiaire 480 du conduit en chicane 414 est ainsi fluidiquement reliée à la chambre 542. Toutefois, les orifices 539 et 543 sont de diamètre suffisamment petit pour autoriser un équilibrage des pressions entre le fluide du flux C1 et le fluide contenu dans la chambre 542, afin de permettre la libre translation de l'obturateur 472, tout en limitant suffisamment l'introduction de fluide du flux C1 à proximité de l'élément d'actionnement 506. L'influence de la température Tc sur la déformation de l'élément d'actionnement 506 est ainsi limitée.

Le boîtier additionnel 406 comprend un col 486, formé par un chanfrein, dénué de garniture d'étanchéité, ménagé dans la partie intermédiaire 480. Une garniture d'étanchéité glissante 545 de forme correspondante est prévue sur l'obturateur 472, la garniture d'étanchéité 545 étant formée par un seul joint glissant fixé axialement selon l'axe X470 entre une extrémité de la paroi cylindrique 474 opposée à l'épaulement 533, et un épaulement 547 externe de la pièce interne 527. Ainsi, sous l'action de l'élément d'actionnement 506, l'obturateur 472 évolue entre une position d'ouverture représentée sur la figure 11, dans laquelle la garniture d'étanchéité 545 est écartée du col 486 de façon à autoriser le passage du flux C1, vers une position d'obturation représentée sur la figure 12, dans laquelle l'obturateur 472 obture la partie intermédiaire 480 par mise en contact étanche de la garniture d'étanchéité 545 avec le col 486. Toujours sous l'action de l'élément d'actionnement 506, l'obturateur 472 peut être translaté jusqu'à une position de surcourse, dans laquelle la garniture d'étanchéité 545 a franchi le col 486 et est en contact avec la partie intermédiaire 480 du conduit en chicane 414, entre le col 486 et la paroi de fond 491.

Le boîtier additionnel 406 comprend en outre un ressort de rappel 504 monté axialement selon l'axe X470 en appui entre la paroi de fond 491 et contre la paroi de fond 541, de façon à exercer une force de rappel élastique de l'obturateur 472 depuis sa position de surcourse ou d'obturation vers sa position d'ouverture. Dans ce troisième mode de réalisation, on comprend que la translation de l'obturateur 472 est dirigée à l'opposé de la sortie de la cartouche, non représentée sur les figures 11 à 13, lorsque l'obturateur 472 passe en position d'obturation depuis la position d'ouverture.

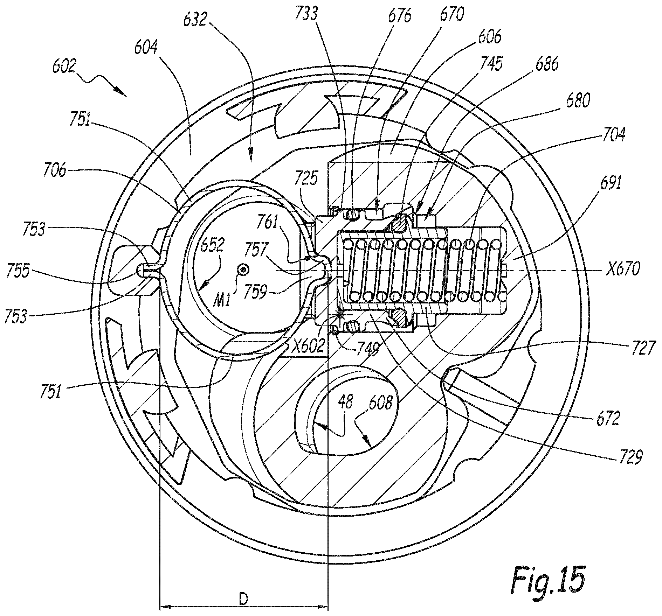

L'unité de mélange 602 du quatrième mode de réalisation représenté aux figures 15 à 17 présente des caractéristiques similaires avec l'unité de mélange 2 du premier mode de réalisation décrit ci-avant et illustré aux figures 1 à 8. Les caractéristiques similaires du premier et du quatrième modes de réalisation susmentionnés sont désignées par un tracé similaire sur le dessin, et/ou des numéros de référence augmentés de 600.

L'unité de mélange 602 des figures 15 à 17 comprend une cartouche 604 préférentiellement identique à la cartouche 4 décrite pour le premier mode de réalisation. Les coupes des figures 15 à 17 sont effectuées dans un plan orthogonal à un axe principal X602, correspondant à l'axe principal X2 du premier mode de réalisation, le plan de coupe comprenant un axe d'obturation X670 de l'unité de mélange 602. L'axe X670 correspondant en l'espèce à l'axe d'obturation X70 du premier mode de réalisation.

Un côté inférieur 632 de la cartouche 604 est visible sur les figures 15 à 17, la cartouche 604 incluant notamment une première entrée 48 et une deuxième entrée non visible sur les figures 15 à 17.

L'unité de mélange 602 comprend également un boîtier additionnel 606 qui est traversé par le plan de coupe des figures 15 à 17. Le boîtier additionnel 606 est rapporté sur la cartouche 604 en étant fluidiquement connecté à cette dernière contre le côté 632 par l'intermédiaire d'un côté supérieur du boîtier 606, lequel n'est pas visible sur les figures 15 à 17.

Le boîtier additionnel 606 comprend un conduit traversant 608 et un conduit en chicane, dont seule une partie intermédiaire 680 est visible sur les figures 15 à 17. La partie intermédiaire 680 s'étend coaxialement avec l'axe X670 et se termine à une extrémité par une paroi de fond 691, similaire à la paroi de fond 491 décrite pour le troisième mode de réalisation ci-dessus. La partie intermédiaire 680 est prolongée par un conduit de logement 670 à une extrémité opposée de la paroi de fond 691. Le conduit de logement 670 débouche, à l'opposé de la partie intermédiaire 680, sur la sortie 652 de la cartouche 604.

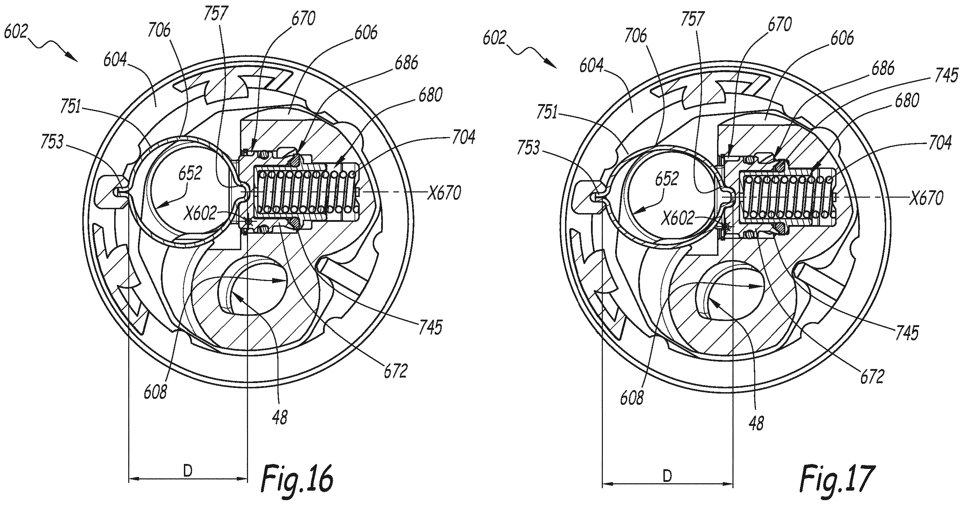

Le boîtier additionnel 606 comprend un obturateur 672, qui présente des similitudes avec l'obturateur 472, en ce qu'il comporte une pièce interne 727 et une pièce externe 725 qui maintiennent axialement entre elles une garniture d'étanchéité glissante 745 de forme correspondante à celle d'un col 686 de la partie intermédiaire 680. L'obturateur 672 évolue entre une position d'ouverture représentée à la figure 15, une position d'obturation, représentée à la figure 16, et une position de surcourse, représentée à la figure 17. Dans ce mode de réalisation la translation de l'obturateur 672 est dirigée à l'opposé de la sortie 52 lorsque l'obturateur 672 passe en position d'obturation depuis la position d'ouverture. Comme dans le cas de l'obturateur 472, l'obturateur 672 comprend également une garniture d'étanchéité glissante 676 solidaire d'une paroi cylindrique 674 de la pièce externe 725. La pièce externe 725 et sa paroi cylindrique 674 forment un poussoir de l'obturateur 672, le poussoir s'étendant dans le conduit de logement 670. Contrairement au cas de l'obturateur 472, la pièce externe 725 de l'obturateur 672 forme un capuchon fermé obturant de façon étanche, grâce à la garniture d'étanchéité 676, le conduit de logement 670. En particulier, la pièce externe 725 est borgne et dépourvue d'orifice traversant. En position d'ouverture, l'obturateur 672 est en butée axiale contre une butée 749 formée par un anneau axialement fixé à l'extrémité ouverte du conduit de logement 670. Plus précisément, c'est un épaulement 733 de la paroi cylindrique 674 qui entre en butée contre la butée rapportée 749.

Le boîtier additionnel 606 comprend également un ressort de rappel 704 de l'obturateur 672 depuis sa position de surcourse ou d'obturation vers sa position d'ouverture, le ressort 704 étant monté de la même façon que le ressort 504 du troisième mode de réalisation décrit ci-avant.

L'unité de mélange 602 comprend également un élément d'actionnement 706 constitué d'un alliage à mémoire de forme. Cet élément d'actionnement 706 comprend deux lames courbes 751, qui sont disposées de façon symétrique l'une par rapport à l'autre, par rapport à un plan de symétrie parallèle à l'axe X602 et passant par l'axe X670. Les deux lames courbes 751 sont disposées de façon à former un élément d'actionnement 706 annulaire.

Chaque lame courbe 751 présente une première extrémité 753 située sur l'axe X670, ou au voisinage de celui-ci. Les extrémités 753 sont fixées en translation le long de l'axe X670, dans une encoche de fixation 755 de la cartouche 604. Les lames courbes 751 présentent une deuxième extrémité 757, qu'elles ont en commun, et qui est opposée aux extrémités 753 le long de l'axe X670. Les lames courbes 751 forment ensemble un élément d'actionnement 706 d'un seul tenant, en étant connectées par l'intermédiaire de leur extrémité commune 757. L'extrémité commune 757 est en butée axiale le long de l'axe X670 contre la pièce externe 725 de l'obturateur 672. En particulier, l'extrémité 757 est montée entre deux ailettes saillantes 759 de la pièce externe 725 dont une seule est visible sur les figures 15 à 17, chacune de ces ailettes 759 s'étendant dans un plan parallèle au plan de coupe des figures 15 à 17. L'élément d'actionnement 706 est ainsi lié en translation à l'obturateur 672 selon l'axe X602. La pièce externe 725 comporte également une encoche 761 dans laquelle l'extrémité 757 est introduite de façon à être maintenue radialement par rapport à l'axe X670 par rapport à l'obturateur 672.

Les extrémités 753 et 757 sont séparées par une distance D orientée parallèlement à l'axe d'obturation X670. L'élément d'actionnement 706 est constitué d'un alliage à mémoire de forme qui se déforme entre une première forme, représentée sur la figure 15, dans laquelle la distance D présente une première valeur, et une deuxième forme, représentée sur la figure 16, dans laquelle la distance D atteint une deuxième valeur supérieure à la première valeur. En pratique, la courbure de chacune des lames courbes 751 présente un rayon qui augmente en fonction de la température Tm du flux sortant M1, lequel traverse l'élément d'actionnement 706. Ainsi, la valeur de la distance D varie lorsque l'élément d'actionnement 706 se déforme entre sa première forme et sa deuxième forme. En conséquence, l'obturateur 672 passe de la position d'ouverture à la position d'obturation, à l'encontre de la force de rappel élastique du ressort 704. L'élément d'actionnement 706 est également configuré pour se déformer selon une troisième forme représentée sur la figure 17 dans laquelle la distance D présente une troisième valeur supérieure à la deuxième valeur, de sorte que l'obturateur 672 est amené dans la position de surcourse.

Selon variante qui ne concerne pas l'invention, l'élément d'actionnement 706 est formé par une seule lame courbe 751, ou un nombre de lames courbes supérieur à deux.

En variante, d'autres formes que celles décrites ci-avant peuvent être prévues pour l'élément d'actionnement en alliage à mémoire de forme.

Dans ce qui précède, on met en œuvre des flux d'eau. Toutefois, d'autres fluides peuvent être utilisés en lieu et place de l'eau, de préférence des flux de fluides liquides. De manière générale, l'entrée 48 correspond à une arrivée d'un premier flux entrant F1 de fluide présentant une première température Tf, alors que l'entrée 50 correspond à une arrivée d'un deuxième flux entrant C1 de fluide présentant une deuxième température Tc qui est supérieure à la première température Tf. Les fluides du premier flux entrant F1 et du deuxième flux entrant C1 sont préférentiellement identiques et liquides, mais peuvent toutefois être de nature différente. L'eau s'échappant du bec du robinet correspond ainsi à un flux sortant M1 de fluide, qui est formé par mélange des premier et deuxième flux entrant F1 et C1 au sein du robinet mitigeur.

Les différents boîtiers additionnels décrits ci-avant peuvent faire l'objet d'une protection séparée de la cartouche 4.

Les caractéristiques de chaque mode de réalisation et variante ci-dessus peuvent être mises en œuvre dans les autres modes de réalisations et variantes pour autant que cela soit techniquement possible.

## Revendications

1. Unité de mélange (602) pour un robinet mitigeur, l'unité de mélange comprenant :
- une première entrée (48) d'un premier flux entrant (F1) de fluide présentant une première température (Tf),
- une deuxième entrée (50) d'un deuxième flux entrant (C1) de fluide présentant une deuxième température (Tc) supérieure à la première température,
- des moyens de mélange (34) du premier flux entrant avec le deuxième flux entrant pour former un flux sortant (M1) de fluide présentant une température de sortie (Tm),
- une sortie (52) pour le flux sortant,
- un conduit de logement (670) qui relie la sortie (52) à la deuxième entrée (50) en s'étendant selon un axe d'obturation (X670) ;
- un obturateur (672), qui est mobile en translation, selon l'axe d'obturation (X670), entre une position d'ouverture de la deuxième entrée et une position d'obturation de la deuxième entrée, l'obturateur (672) comprenant un poussoir s'étendant dans le conduit de logement et obturant le conduit de logement ;
- une garniture glissante (676) d'étanchéité de l'obturation du conduit de logement par le poussoir ;
- un élément d'actionnement (706), qui actionne l'obturateur par l'intermédiaire du poussoir et qui est disposé au moins partiellement à la sortie de façon à se déformer, en fonction de la température de sortie, entre :
∘ une première forme, pour faire passer l'obturateur en position d'ouverture, et
∘ une deuxième forme, pour faire passer l'obturateur en position d'obturation,
**caractérisée en ce que** l'élément d'actionnement (706) est constitué d'un alliage à mémoire de forme et comprend deux lames courbes (751), chaque lame courbe présentant une première extrémité (753) et une deuxième extrémité (757) séparées par une distance (D), mesurée parallèlement à l'axe d'obturation (X670), la valeur de la distance variant lorsque l'élément d'actionnement se déforme entre sa première forme et sa deuxième forme, les deux lames courbes étant disposées de façon que l'élément d'actionnement (706) soit annulaire.

2. Unité de mélange selon la revendication 1, **caractérisée en ce que** les deux lames courbes (751), sont disposées de façon symétrique l'une par rapport à l'autre, par rapport à un plan de symétrie passant par l'axe d'obturation (X670) et étant parallèle à un axe principal (X602) de l'unité de mélange, l'unité de mélange comprenant une cartouche (4) et un boîtier additionnel (6), la cartouche (4) présentant une forme générale cylindrique définissant l'axe principal (X602) avec lequel la cartouche (4) est coaxiale.

3. Unité de mélange selon la revendication 2, **caractérisée en ce que** la cartouche (4) comprend une encoche de fixation (755) par l'intermédiaire de laquelle les premières extrémités (753) sont fixées en translation le long de l'axe d'obturation (X670).

4. Unité de mélange selon l'une quelconque des revendications précédentes, **caractérisée en ce que** les lames courbes (751) ont leur deuxième extrémité (757) en commun et forment ensemble un élément d'actionnement (706) d'un seul tenant.

5. Unité de mélange selon l'une quelconque des revendications précédentes, **caractérisée en ce que** les deuxièmes extrémités (757) sont en butée axiale le long de l'axe d'obturation (X670), contre l'obturateur (672).

6. Unité de mélange (602) selon l'une quelconque des revendications précédentes, **caractérisée en ce que** la translation de l'obturateur (672) est dirigée à l'opposé de la sortie (52) lorsque l'obturateur passe en position d'obturation depuis la position d'ouverture.

7. Unité de mélange selon l'une quelconque des revendications 1 à 5, **caractérisée en ce que** la translation de l'obturateur est dirigée vers la sortie lorsque l'obturateur passe en position d'obturation depuis la position d'ouverture.

8. Robinet mitigeur comprenant une unité de mélange (602) selon l'une quelconque des revendications précédentes.

## Patentansprüche

1. Mischeinheit (602) für eine Mischbatterie, die Mischeinheit umfassend:
- einen ersten Einlass (48) eines ersten eintretenden Stroms (F1) eines Fluids, das eine erste Temperatur (Tf) aufweist,
- einen zweiten Einlass (50) eines zweiten eintretenden Stroms (C1) eines Fluids, das eine zweite Temperatur (Tc) aufweist, die höher als die erste Temperatur ist,
- Mischeinrichtungen (34) zum Mischen des ersten eintretenden Stroms mit dem zweiten eintretenden Strom, um einen ausgehenden Strom (M1) eines Fluids zu bilden, das eine Auslasstemperatur (Tm) aufweist,
- einen Auslass (52) für den ausgehenden Strom,
- einen Gehäusekanal (670), der den Auslass (52) mit dem zweiten Einlass (50) verbindet und sich entlang einer Verschlussachse (X670) erstreckt,
- einen Verschluss (672), der translatorisch entlang der Verschlussachse (X670) zwischen einer geöffneten Position des zweiten Eingangs und einer geschlossenen Position des zweiten Eingangs beweglich ist, der Verschluss (672) umfassend einen Stößel, der sich in den Gehäusekanal erstreckt und den Gehäusekanal schließt;
- eine gleitende Manschette (676) zum Abdichten des Verschlusses des Gehäusekanals durch den Stößel;
- ein Betätigungselement (706), das den Verschluss mittels des Stößels betätigt und das wenigstens teilweise an dem Auslass angeordnet ist, derart, um sich abhängig von der Auslasstemperatur zwischen Folgendem zu verformen:
∘ einer ersten Form, um den Verschluss in Öffnungsposition zu bringen, und
∘ einer zweiten Form, um den Verschluss in Verschlussposition zu bringen,
**dadurch gekennzeichnet, dass** das Betätigungselement (706) aus einer Formgedächtnislegierung besteht und zwei gekrümmte Lamellen (751) umfasst, wobei jede gekrümmte Lamelle ein erstes Ende (753) und ein zweites Ende (757) aufweist, die durch einen Abstand (D) voneinander getrennt sind, gemessen parallel zu der Verschlussachse (X670), wobei sich der Wert des Abstands ändert, wenn das Betätigungselement zwischen seiner ersten Form und seiner zweiten Form verformt wird, wobei die zwei gekrümmten Lamellen angeordnet sind, sodass das Betätigungselement (706) ringförmig ist.

2. Mischeinheit nach Anspruch 1, **dadurch gekennzeichnet, dass** die beiden gekrümmten Lamellen (751) symmetrisch zueinander angeordnet sind, in Bezug auf eine Symmetrieebene, die durch die Verschlussachse (X670) verläuft und parallel zu einer Hauptachse (X602) der Mischeinheit ist, die Mischeinheit eine Kartusche (4) und ein zusätzliches Gehäuse (6) umfasst, wobei die Kartusche (4) eine allgemein zylindrische Form aufweist, die die Hauptachse (X602) definiert, mit der die Kartusche (4) koaxial ist.

3. Mischeinheit nach Anspruch 2, **dadurch gekennzeichnet, dass** die Kartusche (4) eine Befestigungskerbe (755) umfasst, über die die ersten Enden (753) translatorisch entlang der Verschlussachse (X670) befestigt sind.

4. Mischeinheit nach einem der vorherigen Ansprüche, **dadurch gekennzeichnet, dass** die gekrümmten Lamellen (751) ihr zweites Ende (757) gemeinsam haben und zusammen ein einteiliges Betätigungselement (706) bilden.

5. Mischeinheit nach einem der vorherigen Ansprüche, **dadurch gekennzeichnet, dass** die zweiten Enden (757) entlang der Verschlussachse (X670) axial an dem Verschluss (672) anliegen.

6. Mischeinheit (602) nach einem der vorhergehenden Ansprüche, **dadurch gekennzeichnet, dass** die Verschiebung des Verschlusses (672) weg von dem Auslass (52) gerichtet ist, wenn der Verschluss von der offenen Position in die Verschlussposition bewegt wird.

7. Mischeinheit nach einem der Ansprüche 1 bis 5, **dadurch gekennzeichnet, dass** die Verschiebung des Verschlusses in Richtung des Auslasses gerichtet ist, wenn der Verschluss von der Öffnungsposition in die Verschlussposition übergeht.

8. Mischbatterie, umfassend eine Mischeinheit (602) nach einem der vorherigen Ansprüche.

## Claims

1. - A mixing unit (602) for a mixer tap, the mixing unit comprising:
- a first inlet (48) for a first incoming stream (F1) of fluid having a first temperature (Tf),
- a second inlet (50) for a second incoming stream (C1) of fluid having a second temperature (Tc) higher than the first temperature,
- means (34) for mixing the first incoming stream with the second incoming stream to form an outgoing stream (M1) of fluid having an outlet temperature (Tm),
- an outlet (52) for the outgoing stream,
- a housing pipe (670), connecting the outlet (52) to the second inlet (50) while extending along a closure axis (X670),
- a shutter (672), which is translatable along the closure axis (X670), between an open position of the second inlet and a closed position of the second inlet, the shutter (672) comprising a plunger extending in the housing pipe and closing off the housing pipe,
- a sliding sealing gasket (676) for sealing the closure of the housing pipe by the plunger,
- an actuating element (706), which actuates the shutter via the plunger and which is arranged at least partially at the outlet so that the actuating element deforms, based on the outlet temperature, between:
∘ a first shape, to move the shutter to the open position, and
∘ a second shape, to move the shutter to the closed position,
**characterized in that** the actuating element (706) is made from a shape memory alloy and comprises two curved strips (751), each curved strip having a first end (753) and a second end (757) separated by a distance (D), measured parallel to the closure axis (X670), the value of the distance varying when the actuating element deforms between its first shape and its second shape, the two curved strips being arranged such that the actuating element (706) is annular.

2. - The mixing unit according to claim 1, **characterized in that** the two curved strips (751) are symmetrically arranged relative to one another, with respect to a symmetry plane crossed by the closure axis (X670) and parallel to a main axis (X602) of the mixing unit, the mixing unit comprising a cartridge (4) and an additional housing (6), the cartridge (4) having a general cylindrical shape defining the main axis (X602), with which the cartridge (4) is coaxial.

3. - The mixing unit according to claim 2, **characterized in that** the cartridge (4) comprises an attachment notch (755) via which the first ends (753) are fixed in translation along the closure axis (X670).

4. - The mixing unit according to any one of the preceding claims, **characterized in that** the curved strips (751) have their second end (757) in common and together form an single-piece actuating element (706).

5. - The mixing unit according to any one of the preceding claims, **characterized in that** the second ends (757) are in axial abutment along the closure axis (X670), against the shutter (672).

6. The mixing unit (602) according to any one of the preceding claims, **characterized in that** the translation of the shutter (672) is directed opposite to the outlet (52) when the shutter moves to the closed position from the open position.

7. - The mixing unit according to any one of claims 1 to 5, **characterized in that** the translation of the shutter is directed towards the outlet when the shutter moves to the closed position from the open position.

8. - A mixer tap comprising a mixing unit (602) according to any one of the preceding claims.
